# EUROPEAN PATENT APPLICATION

(11) **EP 1 884 918 A2**
(43) Date of publication of application: **06.02.2008**
(21) Application number: 07109130.0
(22) Date of filing: 29.05.2007
(51) Int. Cl.: G09G 3/36

(54) **Display device having dimming panel, dimming driving device, and control method thereof**

(30) Priority: 01.08.2006 KR 20060072665
(71) Applicant: Samsung Electronics Co., Ltd, Suwon-si, Gyeonggi-do 442-742 (KR)
(72) Inventor: Lee, Kye-hoon, Gyeonggi-do (KR); Cho, Kun-ho, Gyeonggi-do (KR)
(74) Representative: Robinson, Ian Michael

(57) **Abstract**

A display device includes a light source (200), a liquid crystal display (LCD) panel, a dimming panel (230) provided between the light source (200) and the LCD panel (250), having a plurality of cells (270), and transmitting light received from the light source (200) to the LCD panel (250) at an individual light transmission rate for each cell, and a control unit (260) calculating the light transmission rate for the each cell using image brightness information on each pixel in an area of the LCD panel (250) corresponding to the each cell of the dimming panel (230), transmitting a control signal to the dimming panel (230) so that the each cell has the individual light transmission rate, and transmitting image information for each pixel to the LCD panel (250).

## Description

Apparatuses and methods consistent with the present invention relate to a display device having a local dimming function, a device for driving a dimming panel, and a control method of the dimming panel, and more particularly, to the performing of a dimming function using a dimming panel.

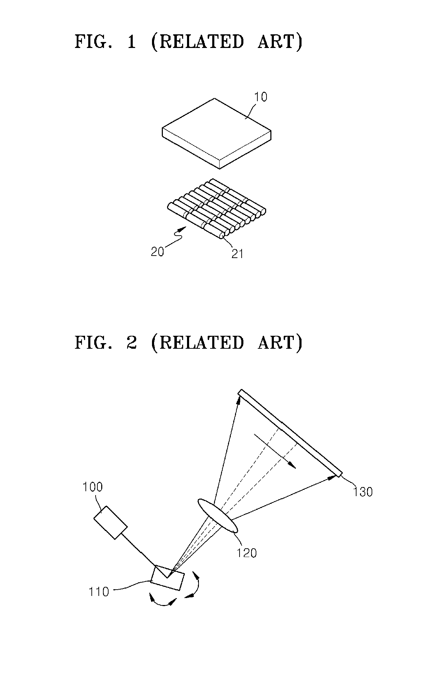

Since an liquid crystal display (LCD) television (TV) has no light emission from an LCD panel itself, a light source that supplies light behind the panel is required. The light source is referred to as a backlight and a surface light source such as a cold cathode fluorescent lamp (CCFL) is widely used. As related technologies are developed, a backlight 20 formed of a combination of a plurality of backlight units 21 as shown in Figure 1 is used instead of a single large CCFL panel so that the intensity of light supplied from the backlight 20 to an LCD panel 10 can be controlled according to a position. That is, by analyzing the distribution of an image signal over a single screen, a less amount of light is supplied to a portion of the screen where an image signal having a relatively lower brightness is concentrated, from the backlight unit corresponding thereto, while a large amount of light is supplied to another portion of the screen where an image signal having a relatively higher brightness is concentrated, from the backlight unit corresponding thereto. Thus, a contrast ratio can be enhanced. This function is referred to as a local dimming.

As shown in Figure 2, there have been attempts to use a point light source 100 like a laser as a light source instead of the surface light source such as the CCFL. Figure 2 shows an example of a backlight using a laser light source. The light emitted from the light source 100 is reflected by a mirror 110 rotating up and down, and left and right, and passes through a diffusion lens 120 to be supplied to an LCD panel.

A problem arises in that a display device using the point light source such as a laser needs to have the local dimming function. To address this and/or other aspects, the present invention provides a display device capable of performing a local dimming.

According to the present invention there is provided an apparatus and method as set forth in the appended claims. Preferred features of the invention will be apparent from the dependent claims, and the description which follows.

The present invention provides a method for more uniformly diffusing the light emitted from a light source in a display device having a local dimming function.

The present invention provides a variety of methods for scanning the light emitted from a laser light source in a display device having a local dimming function.

According to an aspect of the present invention, a display device comprises a light source, an LCD panel driving each of pixels according to an image signal, a dimming panel provided between the light source and the LCD panel, having a plurality of cells, and transmitting light received from the light source to the LCD panel at an individual light transmission rate for each cell, and a control unit calculating the light transmission rate of each cell using image brightness information of each pixel in an area of the LCD panel corresponding to each cell of the dimming panel, transmitting a control signal to the dimming panel so that each cell has the light transmission rate, and transmitting image information for each pixel to the LCD panel.

The control unit determines the light transmission rate to increase as an average value of brightness information of the respective pixels is large.

The display panel further comprises a diffusion lens located between the dimming panel and the LCD panel and diffusing the light from the dimming panel to supply the diffused light to the LCD panel.

The display panel further comprises a Fresnel lens located between the diffusion lens and the LCD panel and changing the light from the diffusion lens to a parallel beam.

The display panel further comprises a diffuser located between the Fresnel lens and the LCD panel and diffusing the light from the Fresnel lens to supply the diffused light to the LCD panel.

According to another aspect of the present invention, an apparatus for driving a dimming panel having a plurality of cells and controlling brightness of light supplied to an LCD panel comprises a driving portion driving each of the cells of the dimming panel and a control unit determining the light transmission rate of each cell using image brightness information of each pixel in an area of the LCD panel corresponding to each cell of the dimming panel and transmitting a control signal corresponding to the determined light transmission rate to the driving portion.

According to another aspect of the present invention, a method for controlling a dimming panel having a plurality of cells and controlling brightness of light supplied to an LCD panel comprises determining the light transmission rate of each cell using image brightness information of each pixel in an area of the LCD panel corresponding to each cell of the dimming panel and driving each cell to transmit the light from a light source according to the light transmission rate.

The above and other aspects of the present invention will become more apparent by describing in detail exemplary embodiments thereof with reference to the attached drawings, in which:
Figure 1 shows an example of a related art backlight with a local dimming function;
Figure 2 shows a related art LCD TV having a laser light source;
Figure 3 shows a display device according to an exemplary embodiment of the present invention;
Figure 4 shows the configuration of a dimming panel according to the present invention;
Figure 5 shows a relation between a dimming panel and pixels of an LCD panel according to an exemplary embodiment of the present invention;
Figure 6 is a detailed view of an LCD panel according to an exemplary embodiment of the present invention;
Figure 7 shows an exemplary embodiment of the dimming panel according to the present invention that is a reflection type;
Figure 8 shows an scanning structure according to an exemplary embodiment of the present invention;
Figure 9 shows an scanning structure according to another exemplary embodiment of the present invention;
Figure 10 shows an scanning structure according to yet another exemplary embodiment of the present invention;
Figure 11 is a detailed view of the galvanometer shown in Figure 10 according to an exemplary embodiment of the present invention;
Figure 12 shows a relation between the dimming panel scan and the signal input of the LCD panel according to an exemplary embodiment of the present invention;
Figure 13 shows the transmission of an image signal of each pixel in an LCD panel in view of a viewer according to an exemplary embodiment of the present invention; and
Figure 14 is a flow chart for explaining the operation of each cell of the dimming panel according to an exemplary embodiment of the present invention.

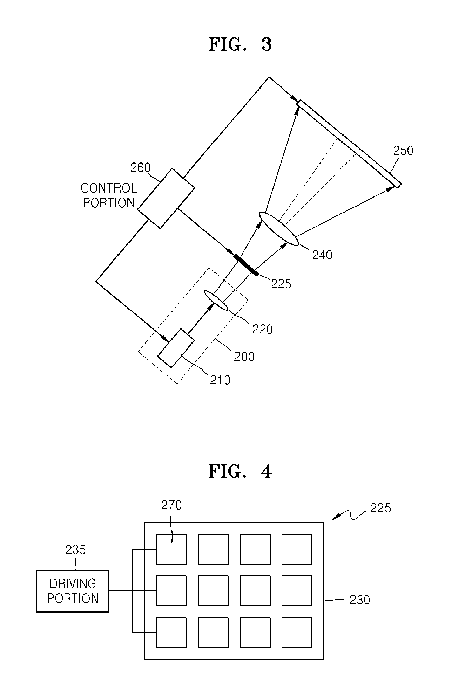

Figure 3 shows a display device according to an exemplary embodiment of the present invention. Referring to Figure 3, a light source unit 200 includes a light source 210 and a first diffusion lens 220. The light diffused by a first diffusion lens 220 passes through a dimming panel unit 225 so that the brightness of the light is controlled for each cell. Then, the controlled light passes through a second diffusion lens 240 to be scanned onto an LCD panel 250. A control unit 260 controls the light source unit 200, the dimming panel unit 225, and the LCD panel 250.

Figure 4 shows the configuration of a dimming panel according to an exemplary embodiment of the present invention. The dimming panel unit 225 includes a dimming panel 230 having a plurality of cells 270 and a driving portion 235 driving each of the cells 270 of the dimming panel 230. The dimming panel 230 includes the cells 270 arranged in two dimensions as shown in Figure 4. Also, the dimming panel 230 may be of a transmission type that controls transmissivity of light like an LCD panel or a reflection type that controls reflectance of light like a digital mirror device (DMD) panel. The dimming panel 230 is driven to transmit the light received from the light source 210 to the LCD panel 250 according to a preset light transmission rate.

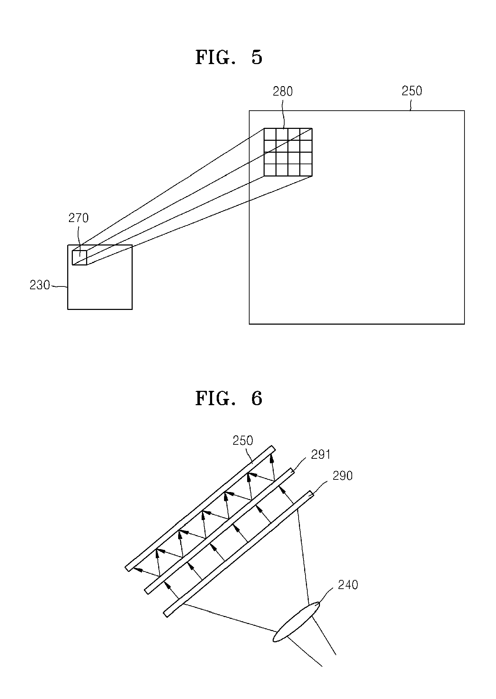

Figure 5 shows a pixel group 280 in the LCD panel 250 corresponding to a cell 270 of the dimming panel 230, according to an exemplary embodiment of the present invention. The light emitted from the light source 210 passes through the cell 270 of the dimming panel 230 and used as a backlight of the pixel group 280 of the LCD panel 250. Since the purpose of dimming is to make bright image information brighter and dark image information darker, the light transmissivity of the cell 270 of the dimming panel 230 is determined using image brightness information on the pixel group 280. Although the light transmissivity of each cell 270 is generally determined proportional to the average of brightness values, various calculation methods can be used. The total number of cells of the dimming panel 230 may be less than the total number of the pixels of the LCD panel 250.

The control unit 260 calculates the light transmission rate of each cell using the image brightness information on the respective pixels in the LCD panel area corresponding to each of the cells of the dimming panel 230, transmits a control signal to the dimming panel 230 so that each cell can have the light transmission rate, and transmits the image information about each pixel to the LCD panel 250.

Figure 6 is a detailed view of the LCD panel 250, showing additional elements helping the light passing through the dimming panel 230 uniformly scanned toward the LCD panel 250, according to an exemplary embodiment of the present invention. The second diffusion lens 240 diffuses the light passing through the dimming panel 230 to correspond to the area of the LCD panel 250. A Fresnel lens 290 converts the diffused light to a parallel beam to be perpendicularly incident on a diffuser 291. The diffuser 291 diffuses the parallel beam again to be supplied to the LCD panel 250.

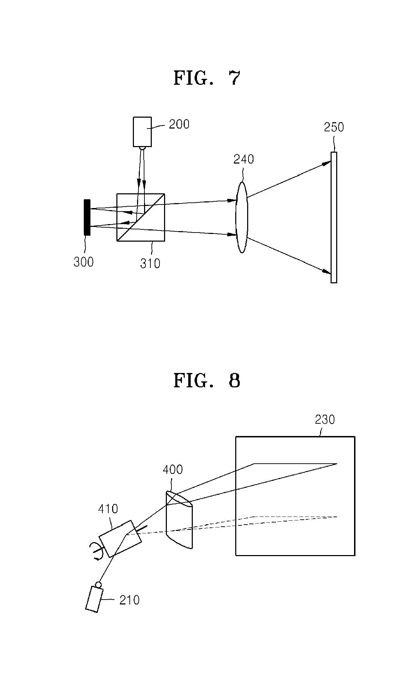

Figure 7 shows an example of a reflection type dimming panel. A light emitted from a light source 200 passes through a light path changing unit 310, for example, a prism, and is incident on a reflection type dimming panel 300. The dimming panel 300 reflects the incident light according to a transmission rate to be supplied to the LCD panel 250. The light reflected by the dimming panel 300 is incident on the LCD panel 250 through the light path changing unit 310 and the diffusion lens 240.

Figures 8 through 10 show exemplary embodiments when the light source is a laser. When the light source is a point light source such as an arc lamp, the light emitted from the light source is designed to be diffused. However, for a laser light source, the light is hardly diffused even when the proceeding length of the light extends due to the linearity of light. Thus, the laser light source needs to be diffused using an additional lens or scanned onto the LCD panel using a scanning mirror.

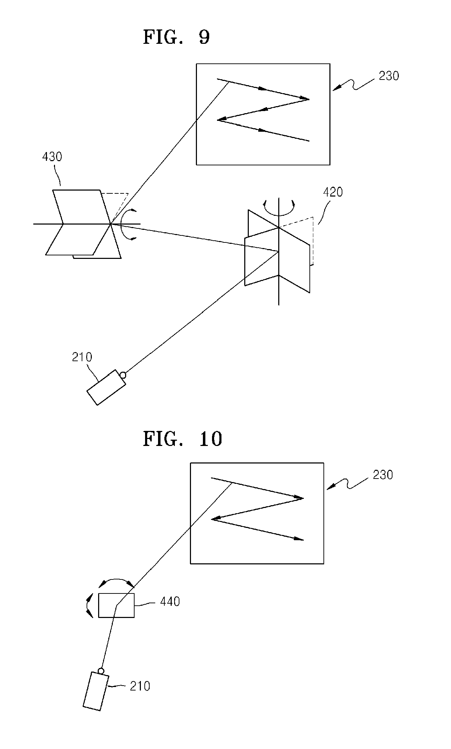

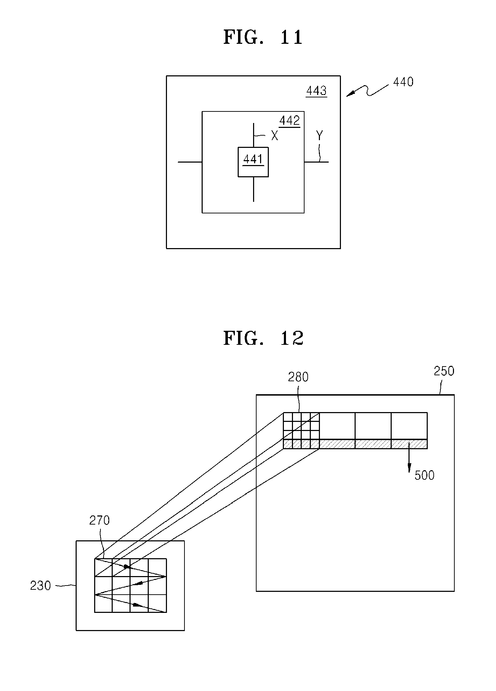

In Figure 8, the light is scanned in a vertical direction of the dimming panel 230 using a scanning mirror 410 and diffused in a horizontal direction using a horizontal diffusion lens 400. The diffusion lens 400 makes the light from the light source a light in a line shape. Thus, the light is supplied to the dimming panel 230 in the shape of a horizontal line that is scanned downward according to the passage of time. In Figure 9, the light is scanned zigzag on the dimming panel 230 after reflected by a horizontal scanning mirror 420 and a vertical scanning mirror 430. Figure 10 shows an example in which the light is scanned zigzag by a galvanometer 440 that rotates up and down and left and right. Figure 11 shows an exemplary internal structure of the galvanometer 440. A mirror 441 can rotate to the left and right with respect to a first axis X as shown in Figure 11. The first axis X is included in a mirror substrate 442 and the mirror substrate 442 includes a second axis Y around which the mirror substrate 442 itself can rotate up and down. The axis Y is included in a scanner substrate 443. Thus, the mirror substrate 442 can freely rotate in the four directions.

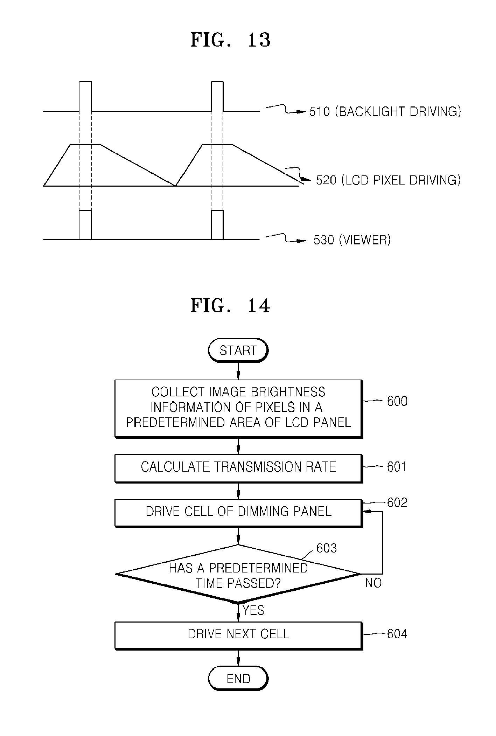

Figure 12 shows that an image signal is transmitted to each pixel of the LCD panel 250 while a laser light source scans the dimming panel 230 according to an exemplary embodiment of the present invention. The laser light source scans light zigzag onto the dimming panel 230 as shown in Figure 12. To display an image to a viewer, when light is supplied by a laser to a particular cell 270 of the dimming panel 230, each pixel of a pixel group 280 in the LCD panel 250 corresponding thereto must have image information. Figure 13 shows the flow of a signal according to the passage of time. As it can be seen from an LCD pixel driving 520, the response time of an LCD pixel is slow. Thus, the image signal remains in the pixel for a considerable time after the image signal is transmitted. In Figure 12, generally, LCD pixels 500 in the same row in the horizontal direction are simultaneously driven and scanned downward. Thus, when the light arrives at a pixel group 280 in the LCD panel 250, the image signals remain in the pixels in the area.

Figure 13 shows, in view of a pixel of an LCD panel, a backlight driving time 510 supplied to the pixel, an LCD pixel driving time 520 for the input of an image signal, and a time 530 for transmitting an image to a viewer, according to an exemplary embodiment of the present invention. For a surface light source, an after-image remains on a screen as shown in the LCD pixel driving time 520 which is referred to as a so-called image delay phenomenon. However, when a light source is supplied for each cell of the dimming panel as in an exemplary embodiment of the present invention, the after-image is removed in view of a viewer so that the image delay phenomenon is reduced.

Figure 14 is a flow chart for explaining the operation of each cell of the dimming panel according to an exemplary embodiment of the present invention. Referring to Figure 14, first, image brightness information in a pixel group of the LCD panel corresponding to each cell of the dimming panel is collected (600). The transmission rate of a predetermined method is calculated using the information. For example, the transmission rate can be calculated with a function that increases the transmission rate as the value of the brightness information increases (601). The cell of the dimming panel is driven with the calculated transmission rate (602). Since the driving of the cell needs to be maintained while the light emitted from the laser light source is scanned onto the cell, it is determined whether a predetermined time passes (603) and then the next cell is driven (604).

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion.

As described above, the present invention enables the local dimming in a display device using a point light source by providing an additional dimming panel. Also, methods for more uniformly diffusing the light emitted from the light source are provided and various methods for scanning light when a laser light source is used are provided. Further, when the dimming panel is used, the dynamic delay phenomenon can be removed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display device comprising:
a light source (200);
a liquid crystal display (LCD) panel (250) comprising a plurality of pixels;
a dimming panel (230) which is provided between the light source (200) and the LCD panel (250), comprises a plurality of cells (270), and transmits light received from the light source (200) to the LCD panel (250) at an individual light transmission rate for each cell of the plurality of cells (270); and
a control unit (260) which calculates the individual light transmission rate for the each cell using image brightness information on each pixel of the plurality of pixels in an area of the LCD panel (250) corresponding to the each cell, transmits a control signal to the dimming panel (230) so that the each cell has the individual light transmission rate, and transmits image information for the each pixel to the LCD panel (250).

2. The display panel of claim 1, wherein the control unit (260) determines the individual light transmission rate for the each cell to increase as an average value of image brightness information on the area increases.

3. The display panel of claim 1, further comprising a diffusion lens (240) which is located between the dimming panel (230) and the LCD panel (250), and diffuses the light from the dimming panel (230) to supply the diffused light to the LCD panel (250).

4. The display panel of any preceding claim, further comprising a Fresnel lens (290) which is located between the diffusion lens (240) and the LCD panel (250), and changes the light from the diffusion lens (240) to a parallel beam.

5. The display panel of claim 4, further comprising a diffuser (291) which is located between the Fresnel lens (290) and the LCD panel (250), and diffuses the light from the Fresnel lens (290) to supply the diffused light to the LCD panel (250).

6. The display panel of any preceding claim, wherein the plurality of cells (270) of the dimming panel (230) are arranged in two dimensions, and the total number of the plurality of cells (270) is less than the total number of the plurality of pixels of the LCD panel (250).

7. The display panel of claim 6, wherein the dimming panel (230) comprises a transmission type LCD panel (230).

8. The display panel of claim 6, wherein the dimming panel (230) comprises a reflection type panel (300), and the display panel further comprising a light path changing unit (310) changing a path of the light delivered from the light source (200) and supplying the light to the reflection type panel (300).

9. The display panel of any preceding claim, wherein the light source (200) comprises a laser light source (200).

10. The display panel of claim 9, further comprising at least one scanning mirror (410, 420, 430) which reflects the light from the light source (200) to proceed to the dimming panel (230), and causes a reflection direction to change according to time.

11. The display panel of claim 10, further comprising a diffusion lens (400) which changes the light from the light source (200) to a light in a line shape.

12. The display panel of claim 10, wherein the scanning mirror comprises a first mirror (430) scanning the light in a vertical direction of the dimming panel (230) and a second mirror (420) scanning the light in a horizontal direction of the dimming panel (230).

13. The display panel of claim 10, further comprising a mirror substrate (442) which is connected to a rotation axis of the scanning mirror (441), and comprises a rotation axis that is perpendicular to the rotation axis of the scanning mirror (441).

14. An apparatus for driving a dimming panel (230) which comprises a plurality of cells (270) and controls brightness of light supplied to an LCD panel (250) comprising a plurality of pixels, the apparatus comprising:
a driving unit (235) which drives each cell of the plurality of cells (270) of the dimming panel (230); and
a control unit (260) which determines a light transmission rate for the each cell using image brightness information on each pixel of the plurality of pixels in an area of the LCD panel (250) corresponding to the each cell, and transmits a control signal corresponding to the determined light transmission rate to the driving unit (235).

15. The apparatus of claim 14, wherein the control unit (260) determines the light transmission rate for the each cell to increase as an average value of image brightness information on the area increases.

16. A method for controlling a dimming panel (230) comprising a plurality of cells (270) and controls brightness of light supplied to an LCD panel (250) comprising a plurality of pixels, the method comprising:
determining a light transmission rate for each cell of the plurality of cells (270) of the dimming panel (230) using image brightness information on each pixel of the plurality of pixels in an area of the LCD panel (250) corresponding to the each cell; and
driving the each cell to transmit the light from a light source (200) according to the light transmission rate.

17. The method of claim 16, wherein, in the determining the light transmission rate, the light transmission rate is determined to increase as an average value of image brightness information on the area increases.
